# EUROPÄISCHE PATENTANMELDUNG

(11) **EP 0 763 456 A1**
(43) Veröffentlichungstag der Anmeldung: **19.03.1997**
(21) Anmeldenummer: 96112778.4
(22) Anmeldetag: 08.08.1996
(51) Int. Cl.: B61L 3/00, B60L 3/02

(54) **Verfahren und Vorrichtung zur Überwachung und zum automatischen Anhalten eines von einem Fahrer gesteuerten Schienenfahrzeuges**

(30) Priorität: 15.09.1995 IT MI951926
(71) Anmelder: ABB Tecnomasio S.p.A., 20090 Segrate (IT)
(72) Erfinder: Colombo, Alberto, 20010 Mesero (IT); Chiola, Osvaldo, 20070 Lodi (IT)
(74) Vertreter: Mayer, Hans Benno, Dipl.-Ing.

(57) **Zusammenfassung**

Die Erfindung betrifft ein Verfahren und eine Vorrichtung zur Überwachung und zum automatischen Anhalten eines von einem Fahrer gesteuerten Schienenfahrzeuges.

Nach dem vorgeschlagenen Verfahren erscheint auf dem Monitor ein vom Fahrer abgegebenes Wachsamkeitssignal (SV), wobei bei Empfang dieses Signals eine Zeitmessung auf Null gestellt wird, während bei Nichtempfang des Signals nach einer vorgegebenen Zeitspanne (T1) dem Fahrer ein Warnsignal (12) übermittelt wird und die Notbremsung (FU) des Fahrzeuges angesteuert wird, sofern der Fahrer innerhalb einer zweiten vorgegebenen Zeitspanne (T2) kein Wachsamkeitssignal (SV) abgegeben hat.

Die Vorrichtung führt eine komplette und von anderen, eventuell im Fahrzeug vorhandenen Geräten unbhängige Kontrolle durch und ist vollständig redundant, da zwei ständig wirksame Kanäle vorgesehen sind, die jeweils in der Lage sind, bei Bedarf die Notbremsung des Fahrzeuges anzusteuern.

## Beschreibung

Die Erfindung betrifft Sicherheitssysteme, die für schienengebundene Verkehrsmittel, wie Strassenbahnen, Stadtbahnen, Züge u.dgl. vorgesehen sind. Insbesondere betrifft die Erfindung ein Verfahren und eine Vorrichtung zum Überwachen und zum automatischen Anhalten eines von einem Fahrer gesteuerten Schienenfahrzeuges.

Bei Transportsystemen, insbesondere bei Fahrzeugen für den Personenverkehr sind verschiedenartige Vorrichtungen zur Überwachung des Wachsamkeitszustandes des Fahrers oder Zugführers vorgesehen, um zu vermeiden, dass eine auch nur vorübergehende Dienstunfähigkeit dieser Person zu Gefahrenmomenten führen könnte. Diese Überwachungssysteme, die Verbesserungen der sogenannten Einrichtung "toter Mann" darstellen, haben sich auch zu stark ausgeklügelten technischen Formen entwickelt.

Es sind zum Beispiel Systeme bekannt, bei denen Mittel vorgesehen sind, die in der Lage sind, Zeiten zu erfassen, während denen die Augenlider geschlossen sind, um somit Schläfrigkeitszustände zu ermitteln und ein Notsignal zu erzeugen.

Zu diesem Zweck ist eine auf den Fahrer gerichtete CCD-Fernsehkamera vorgesehen, während bei anderen Lösungen ein Fühler zur Ermittlung der Bewegungen der Augenlider vorhanden ist.

Weniger ausgeklügelte Systeme sehen die Auslösung eines Alarmsignals vor, wenn der Fahrer innerhalb einer gewissen Zeitspanne einen Kontakt nicht schliesst oder einen auf einen Steuerhebel auszuübenden Handdruck lockert.
Die Anwendung der bekannten Vorrichtungen ist jedoch bei im öffentlichen Personennahverkehr eingesetzten Schienenfahrzeugen nicht zufriedenstellend, da Strassen- und Stadtbahnen besondere technischen Eigenschaften aufweisen, wie etwa, dass sie zwar in fester Spur laufen, sich jedoch im Strassennetz mit der Fahrbahn anderer Fahrzeuge überschneiden, häufig anhalten müssen, mit relativ hohen Geschwindigkeiten und relativ kurzen Entfernungen zwischen den Haltestellen fahren usw.

Bei dieser Transportart ist es erforderlich, einerseits den Aufmerksamkeitsgrad des Fahrers praktisch dauernd zu ermitteln und anderseits, die Beanspruchung desselben auf das wirklich Notwendige zu beschränken, wobei gleichzeitig die besonderen Eigenschaften des Systems, wie zum Beispiel die von den Fahrgästen gesteuerte Öffnung der Türen, zu berücksichtigen sind.

Die Anwendung der bekannten Vorrichtungen bei solchen Transportfahrzeugen ist nicht praktisch, da die bekannten Systeme entweder zu einfach und daher zur Bewältigung der zahlreichen auftretenden Fällen ungeeignet sind oder zu aufwendig und daher als nicht ausreichend zuverlässig angesehen werden.

Aufgabe der vorstehenden Erfindung ist es, die Einschränkungen und Nachteile der Vorrichtungen und Systeme, die aus dem Stand der Technik her bekannt sind, zu vermeiden, insbesondere soll ein Verfahren und eine Überwachungsvorrichtung vorgeschlagen werden, die eine positive Überwachung in kurzen Zeitabständen der körperlichen Verfassung des Fahrzeugfahrers ermöglichen, ohne dass der Fahrer dadurch besonders in Anspruch genommen wird, wobei die Überwachung auf Gefahrensmomente beschränkt ist und sich auf Gefahrenmomente bezieht, die tatsächlich eine Einschränkung des Fahrvermögens der Fahrers mitbringen könnte.

Diese Aufgaben werden durch die Erfindung mit einem Verfahren zur Überwachung und zum automatischen Anhalten eines von einem Fahrer gelenkten Schienenfahrzeuges gelöst, das dadurch gekennzeichnet ist, dass es während einer Tätigkeitsspanne folgende Schritte umfasst:
a) auf dem Monitor erscheint ein durch den Fahrer abgegebenes Wachsamkeitssignal,
b) bei jedem Empfang dieses Wachsamkeitssignals wird ein Zeitmessvorgang auf Null gestellt,
c) sobald die Zeitmessung eine vorgegebene Dauer erreicht hat, wird dem Fahrer ein Warnsignal übermittelt,
d) falls das Wachsamkeitssignal innerhalb einer zweiten vorgegebenen Zeitspanne und nach Abgabe des Warnsignals abgegeben wird, kehrt man zum Schritt b) zurück, während im umgekehrten Fall die Notbremsung des Fahrzeuges angesteuert wird.

Die Erfindung betrifft ausserdem eine Vorrichtung zur Überwachung und zum automatischen Anhalten eines von einem Fahrer geführten Schienenfahrzeuges, die dadurch gekennzeichnet ist, dass:
- zwei mikroprozessorgestützten Logikkarten mit Verarbeitungs-, Ansteuer- und Auswertungsfunktionen, die einander gleich und gegeneinander austauschbar vorgesehen sind und nach dem Master-Slave-System gleichzeitig arbeiten, und ferner zwei getrennte Speisegeräte für die Logikkarten und ein gemeinsamer Warnsignalgeber vorgesehen sind.

Ferner sieht die Erfindung einen Fahrschalter vor zum Steuern eines mit einer Vorrichtung zur Überwachung und zum automatischen Anhalten versehenen Fahrzeuges, der durch einen Hebel gekennzeichnet ist, der einen Teil aufweist, in dem zwei Kontakte eingebaut sind, die der Fahrer mit einem leichten Fingerdruck schliessen kann.

Weitere, vorteilhafte Merkmale der Erfindung sind Gegenstand der Unteransprüche.

Nachstehend wird die Erfindung mit besonderem Bezug auf eine bevorzugte Ausführungsform näher beschrieben, die bei einem städtischen Strassenbahnsystem Anwendung findet, wobei die Erfindung jedoch auch bei anderen Systemen zur Anwendung kommen kann, bei denen ähnliche Probleme gelöst werden sollen.

Das erfindungsgemässe System ermöglicht die komplette und von anderen, eventuell im Fahrzeug vorhandenen Geräten unbhängige Kontrolle der Anwesenheit und des Wachsamkeitszustandes des Fahrers.

Das erfindungsgemässe System ist vollständig redundant, und sieht zwei ständig wirksame Kanäle vor, die jeweils in der Lage sind, die Notbremsung des Fahrzeuges bei Bedarf einzuleiten.

Dier Erfindung wird anhand einer bevorzugten, jedoch nicht beschränkenden, in den beiliegenden Zeichnungen dargestellten Ausführungsform näher beschrieben.

Es zeigen:
Figur 1 eine schematische Ansicht des Aufbaues der erfindungsgemässen Vorrichtung;
Figur 2 den Aufbau der Logikkarte eines Kanals für die erfindungsgemässen Vorrichtung;
Figur 3 den Hebel des kombinierten Brems-/Fahrschalters;
Figur 4 das allgemeine Schaltbild der Steuerung des jeweiligen Kanals;
Figur 5 und 6 die Art und Weise, auf die die erfindungsgemässe Vorrichtung die Kontrolle durchführt und anspricht;
Figur 7 mehrere Zeitdiagramme, die die Hemmungsfolge der Vorrichtung darstellen.

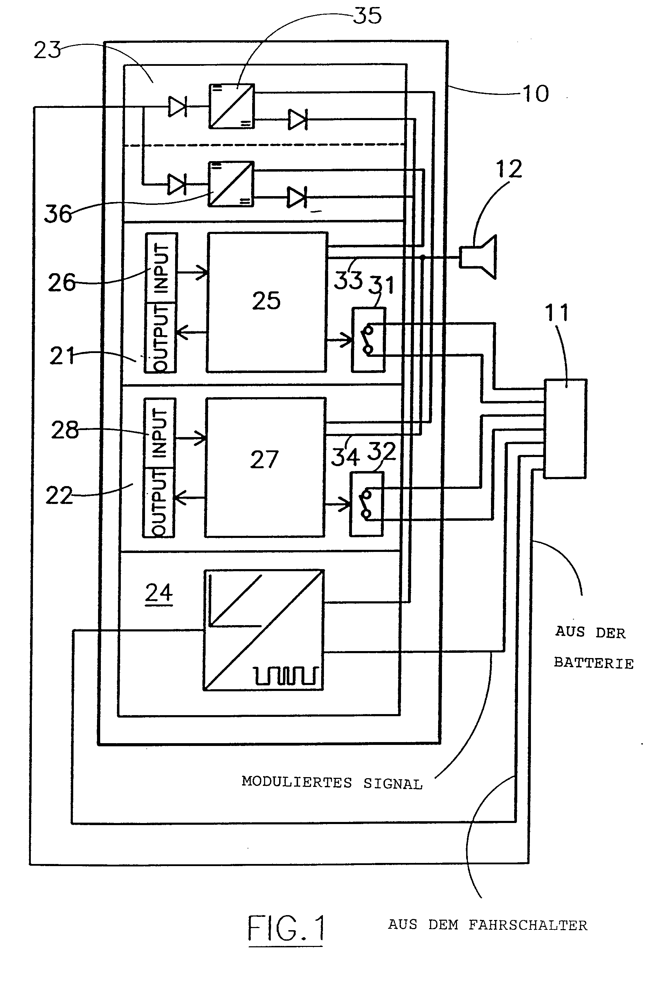

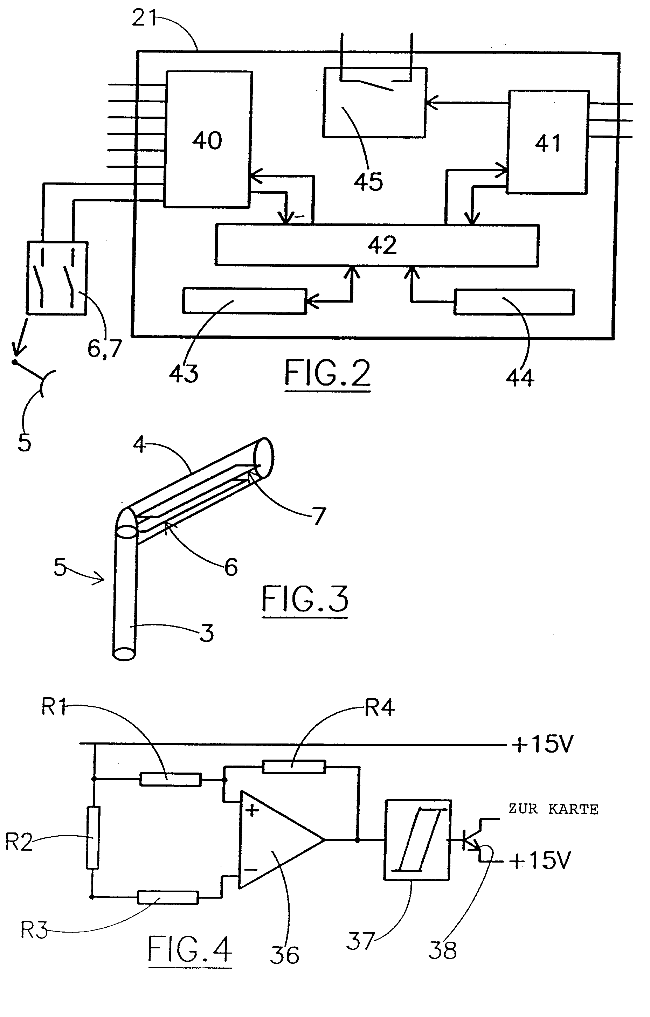

Figur 1 stellt den Aufbau der erfindungsgemässen Vorrichtung schematisch dar. Es sind vier Chipkarten vorgesehen, die in einem Gehäuse oder Rack 10 eingebaut und elektrisch miteinander verbunden sind. Nach aussen ist eine einzige Verbindund 11 vorgesehen, die sowohl die Ein- und Ausgangssignale als auch die Versorgungsspannungen führt. Figur 2 stellt die der Karte 22 entsprechende Logikkarte 21 der erfindungsgemässen Vorrichtung dar.

Jede Karte weist eine Eingangsschnittstelle 40, eine Ausgangsschnittstelle 41, eine Verarbeitungseinheit 42, vorzugsweise einen programmierten Mikroprozessor, der in einen Verarbeitungs- und in einen Auswertungsprogramm unterteilt ist, zwei Speicher, und zwar einen Datenspeicher 43 und einen Programmspeicher 44, sowie auf die Kontrollklemme (Boucle) wirkende Betätigungselemente auf. Die Betätigung der Klemme der Notbremse erfolgt über ein Relais, dessen Kontakte in Reihe geschaltet sind. Bevor sie die Öffnung der Kontakte steuert, stösst die Vorrichtung über den Summer ein Warnsignal aus und, wenn der Fahrer innerhalb einer vorgegebenen Zeitspanne, zum Beispiel 2 Sekunden, nicht mit der erforderlichen Öffnungs- und Schliessfolge der Kontakte am Hebel 5 antwortet, leitet das System die Notbremsung ein.

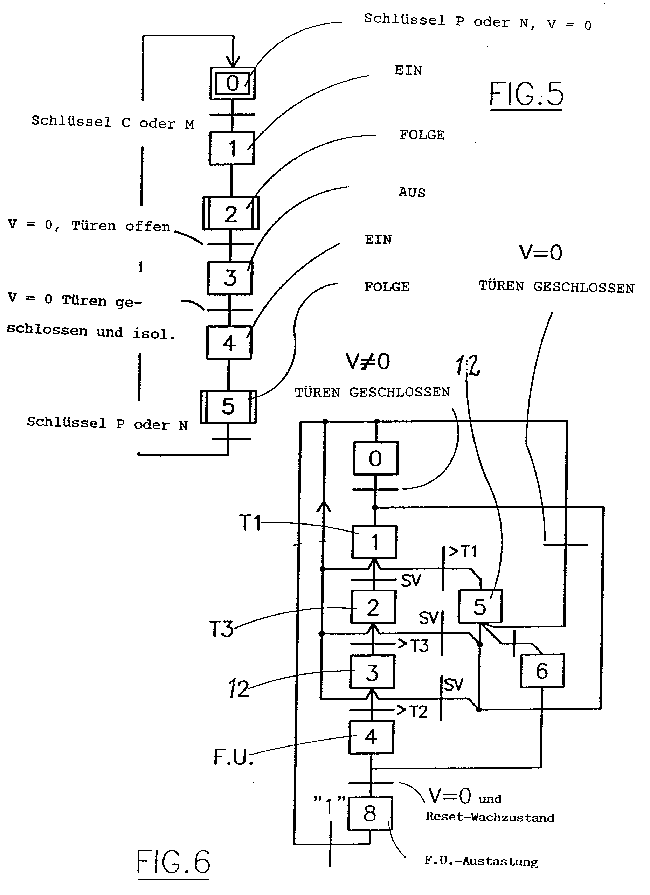

Im Anschluss wird die Art und Weise, auf die die erfindungsgemässe Vorrichtung die Kontrolle durchführt und anspricht, an Hand der Figuren 5 und 6 geschildert.

Im Blockschaltbild nach Figur 5 sind die Zustände über mit Zahlen versehene Rechtecke angegeben, während die Vorgänge, die diese Zustände ausgelöst haben, mit einem Strich auf der Flusslinie neben einer kurzen Schilderung angegeben sind. Im "Anfangs"-Zustand 0 liegen folgende Bedingungen vor:
- Fahrstandschlüssel in Neutral- oder Vorbereitungsstellung
- Geschwindigkeit = 0
- Vorrichtung NICHT aktiviert.

Wenn der Schlüssel in Fahr- oder Dienststellung gebracht wird, wird die Vorrichtung angesteuert (Zustand 1) und erreicht dann den Zustand 2, bei dem die Arbeitsfolge der Vorrichtung stattfindet, die im Anschluss noch eingehender beschrieben wird.

Der Zustand 3, bei dem die Vorrichtung unwirksam ist, ergibt sich, wenn (wenigstens) eine Tür offen ist und die Geschwindigkeit gleichzeitig dem Wert 0 entspricht, und entspricht den normalen Bedingungen, bei denen das Fahrzeug in einem Bahnhof oder an einer Haltestelle zum Ein- und Aussteigen der Fahrgäste anhält.

Der anschliessende Ablauf der Vorgänge, bei denen die Türen geschlossen sind und die Geschwindigkeit immer gleich 0 ist, löst das erneute Ansteuern der Vorrichtung (Zustand 4) aus, die dann den Zustand 5 erreicht, bei dem die Arbeitsfolge stattfindet.

Wird der Fahrstandschlüssel in Neutral- oder Vorbereitungsstellung zurückgebracht, so kehrt die Vorrichtung zum Anfangs- oder Wartezustand 0 zurück.

Das Blockschaltbild von Figur 6 zeigt die Art und Weise, mit der die erfindungsgemässe Vorrichtung arbeitet und anspricht.

Der Zustand 0 entspricht der sich der Ansteuerung der Vorrichtung anschliessenden anfänglichen Bedingung (siehe Zustände 2 oder 5 in Figur 5). Zunächst wird die Hauptstrecke geschildert, während die Zweigstrecken weiter vorn getrennt beschrieben werden.

Bei einer Geschwindigkeit, die anders als Null ist (fahrendes Fahrzeug), und bei geschlossenen Türen, wird der Zustand 1 erreicht und es fängt die Zeitzählung einer ersten Wartezeitspanne T1 an. Vergeht die Zeit T1 ohne dass der Fahrer seine Rückmeldung SV ausgelöst hat, wird der Zustand 5 erreicht, bei dem der Summer 12 eingeschaltet wird, wie im Anschluss noch näher geschildert wird. Wird dagegen das Signal SV in der Zeitspanne T empfangen, so erfolgt eine Rückstellung und neue Zählung, beginnend bei O.

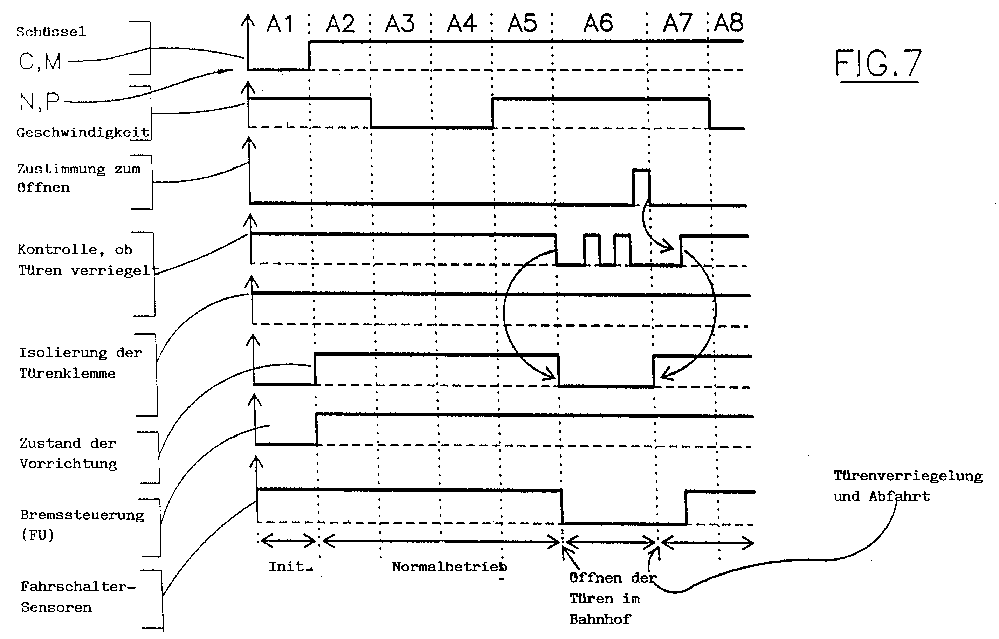

Figur 7 zeigt die Folge der Überwachungsvorgänge der Vorrichtung, sie besteht aus mehreren Zeitdiagrammen, deren jeweilige Bedeutung in der Figur angegeben ist.

Während der Initialisierungszeitspanne A1 befindet sich der Schlüssel in Stellung P oder N und das Fahrzeug steht still (Geschwindigkeit V = 0), die Türen sind geschlossen (oder das Kontrollsignal der Türen zeigt an, dass diese geschlossen sind), die Vorrichtung befindet sich in abgeschaltetem Zustand. Folglich ist das Bremssteuersignal FU wirksam.

In der anschliessenden Zeitspanne A2 hat der Fahrer den Fahrstandschlüssel in Fahstellung gedreht, wobei die Vorrichtung auch bei noch stehendem Fahrzeug eingeschaltet und die Bremssteuerung FU abgeschaltet (und mit der Ansteuerlogik verriegelt) ist.

Die anschliessenden Zeitspannen A3 und A4 unterscheiden sich von der vorher erwähnten Zeitspanne dadurch, dass sich das Fahrzeug bewegt (V anders als Null).

In der Zeitspanne A5 steht das Fahrzeug bereits im Bahnhof (V = 0), aber die Türen sind noch geschlossen und die Vorrichtung ist noch eingeschaltet. Die Zeitspannen A2-A5 entsprechen normalen Betriebsbedingungen.

In der anschliessenden Zeitspanne A6 werden die Türen geöffnet und folglich wird die Vorrichtung abgeschaltet (es wird insbesondere auf den Pfeil aufmerksam gemacht). Die Grenze zwischen A5 und A6 entspricht eben dem Öffnen der Türen im Bahnhof.

Während der Zeitspanne A7, nach dem Ein- und Aussteigen der Fahrgäste, und wegen der auf Null gestellten Zustimmung zum Öffnen der Türen (bei noch stehendem Fahrzeug) steigt das Steuersignal der Türenverriegelung auf einen hohen Pegel an und folglich wird die Vorrichtung wieder eingeschaltet. In der anschliessenden Zeitspanne A8 fährt das Fahrzeug erneut ab (V anders al Null) und, falls keine anderen Zustandsänderungen vorkommen, fängt der Ablauf A2-A5 erneut von vorne an.

## Patentansprüche

1. Verfahren zum Überwachen und automatischen Anhalten eines von einem Fahrer gelenkten Schienenfahrzeuges, **dadurch gekennzeichnet**, dass während einer vorgegebenen Zeitspanne folgende Schritte erfolgen:
a) Überwachen eines durch den Fahrer gegebenes Wachsamkeitssignal (SV),
b) bei jedem Empfang dieses Wachsamkeitssignals Zurückstellen der Zeitmessung auf Null,
c) sobald die Zeitmessung eine vorgegebene Dauer (T1) erreicht, wird dem Fahrer ein Warnsignal (12) übermittelt,
d) falls das Wachsamkeitssignal (SV) innerhalb einer zweiten vorgegebenen Zeitspanne (T2) nach Abgabe des Warnsignals ausgegeben wird, Rückkehr zum Schritt b), wobei im umgekehrten Fall die Notbremsung (FU) des Fahrzeuges angesteuert wird.

2. Verfahren nach Patentanspruch 1, **dadurch gekennzeichnet**, dass das Fahrzeug der Triebwagen einer Personentransportbahn ist und dass die Tätigkeitszeitspanne ein Betätigen des Fahrstandschlüssels und die gleichzeitige Schliesstellung der Fahrzeugtüren verlangt.

3. Verfahren nach Anspruch 1, **dadurch gekennzeichnet**, dass die Tätigkeitszeitspanne bei wenigstens einer offenen Tür und bei Fahrzeuggeschwindigkeit 0 eingestellt wird.

4. Verfahren nach Patentanspruch 1, **dadurch gekennzeichnet** dass das Wachsamkeitssignal aus einer Folge von durch den Fahrer vorgenommenen Vorgängen besteht, bei denen elektrische Kontakte geschlossen und geöffnet werden.

5. Verfahren nach Patentanspruch 1, **dadurch gekennzeichnet**, dass das Warnsignal ein akustisches Signal ist.

6. Vorrichtung zur Überwachung und zum automatischen Anhalten eines von einem Fahrer geführten Schienenfahrzeuges, zur Durchführung des Verfahrens nach Patentanspruch 1, **dadurch gekennzeichnet**, dass:
- zwei mikroprozessorgestützte Logikkarten mit Verarbeitungs-, Ansteuer- und Auswertungsfunktionen vorgesehen sind, die gleich im Aufbau und miteinander austauschbar sind und nach dem Master-Slave-System gleichzeitig arbeiten;
- zwei getrennte Speisegeräte (35, 36) für die Logikkarten vorgesehen sind und
- ein gemeinsamer Warnsignalgeber (12) vorgesehen ist.

7. Vorrichtung nach Patentanspruch 6, **dadurch gekennzeichnet**, dass jede Logikkarte in Abhängigkeit von den Eingangssignalen und über ein Programm das Schliessen bzw. das Öffnen eines Kontaktpaares (31, 32) auslöst, welche die Auslösung einer Notbremsung kontrollieren.

8. Vorrichtung nach Patentanspruch 7, **dadurch gekennzeichnet**, dass jede Karte eine Eingangsschnittstelle (40), eine Ausgangsschnittstelle (41), eine Verarbeitungseinheit (42), einen Datenspeicher (43) und einen Programmspeicher (44) sowie Betätigungselemente (45) umfasst, die auf die Bremsvorrichtung einwirken.

9. Vorrichtung nach Patentanspruch 7, **dadurch gekennzeichnet**, dass die Vorrichtungen (40 - 45) in einem Gehäuse (10) eingebaut sind, das für die Ein- und Ausgangssignale, sowie die Zuführung der Versorgungsspannung eine einzige Verbindung (11) nach aussen aufweist.

10. Fahrschalter, zum Steuern eines mit einer Vorrichtung zur Überwachung und zum automatischen Anhalten versehenen Fahrzeuges, nach Patentanspruch 7, **dadurch gekennzeichnet**, dass der Schalter einen Hebel (5) umfasst, der einen Teil (4) aufweist, in dem zwei Kontakte (6, 7) eingebaut sind, die der Fahrer über leichten Fingerdruck schliessen kann.

11. Fahrschalter, nach Patentanspruch 10, **dadurch gekennzeichnet**, dass die Kontakte (6, 7) Widerstandskontakte sind.

12. Fahrschalter, nach Patentanspruch 10, **dadurch gekennzeichnet**, dass die Kontakte (6, 7) kapazitive Kontakte sind.

13. Fahrschalter, nach Patentanspruch 10, **dadurch** **gekennzeichnet**, dass zur Verstärkung der Kapazitäts- bzw. der Widerstandsänderung eine in der Nähe der Sensoren des Fahrschalters angeordnete Aufbereitungselektronik vorgesehen ist, die ein mit dem Eingang eines Operationsverstärkers (36) verbundenes Widerstandsnetz (R1, R2, R3), einen mit dem Ausgang des Operationsverstärkers (36) verbundenen Rechteckkreis (Squaring Circuit) (37) und einen Transistor (38) umfassen.
